# EUROPÄISCHE PATENTSCHRIFT

(11) **EP 1 942 537 B1**
(45) Veröffentlichungstag und Bekanntmachung des Hinweises auf die Patenterteilung: **27.01.2016**
(21) Anmeldenummer: 07121731.9
(22) Anmeldetag: 28.11.2007
(51) Int. Cl.: H01M 8/00, H01M 8/06, C01B 3/36

(54) **Brennstoffzellensystem mit einer Regenerationseinrichtung für einen Reformer und zugehöriges Verfahren**
Fuel cell system including a regeneration arrangement for a reformer and method thereof
Système de pile à combustible avec un dispositif de régénération pour un reformeur et son procédé

(30) Priorität: 04.12.2006 DE 102006057357
(43) Veröffentlichungstag der Anmeldung: 09.07.2008
(73) Patentinhaber: Eberspächer Climate Control Systems GmbH & Co. KG, 73730 Esslingen (DE)
(72) Erfinder: Reiners, Karsten, 73732 Esslingen (DE)
(74) Vertreter: BRP Renaud & Partner mbB Rechtsanwälte Patentanwälte Steuerberater

(56) Entgegenhaltungen:
- WO-A-2006/095910
- DE-A1- 10 127 199
- US-A- 4 240 805
- US-A1- 2004 241 505
- KIKAS T ET AL: "Hydrogen production in a reverse-flow autothermal catalytic microreactor: from evidence of performance enhancement to innovative reactor design" INDUSTRIAL & ENGINEERING CHEMISTRY RESEARCH, AMERICAN CHEMICAL SOCIETY. WASHINGTON, US, Bd. 42, 2003, Seiten 6273-6279, XP002355824 ISSN: 0888-5885

## Beschreibung

Die vorliegende Erfindung betrifft ein Brennstoffzellensystem, insbesondere in einem Kraftfahrzeug, mit den Merkmalen des Oberbegriffs des Anspruchs 1. Die Erfindung betrifft außerdem ein Verfahren zum Betreiben eines derartigen Brennstoffzellensystems.

Ein Brennstoffzellensystem umfasst üblicherweise einen Reformer zum Generieren eines Wasserstoffgas enthaltenden Anodengases aus einem Wasserstoff enthaltenden Brennstoff und einem Sauerstoff enthaltenden Oxidator. Ferner umfasst ein Brennstoffzellensystem regelmäßig eine Brennstoffzelle zum Generieren von elektrischem Strom aus dem Anodengas des Reformers und einem Sauerstoffgas enthaltenden Kathodengas.

Während eines Normalbetriebs des Brennstoffzellensystems, während dem der Reformer Anodengas produziert und während dem an der Brennstoffzelle Strom abgreifbar ist, kommt es im Reformer zu Ablagerungen, die die Leistungsfähigkeit des Reformers reduzieren. Beispielsweise umfasst ein konventioneller Reformer einen Katalysator, in dem eine partielle Oxidation des Brennstoffs durchgeführt wird, um das Anodengas zu erzeugen. Hierbei können sich Verunreinigungen oder Reaktionsnebenprodukte, insbesondere Ruß, an der katalytisch aktiven Oberfläche des Katalysators ablagern, wodurch sich die Effektivität des Katalysators und somit des Reformers reduziert.

Aus der US 2004/0241505 A1, aus der US 4 240 805 A und aus der WO 2006/0959910 A1 sind Brennstoffzellensysteme bekannt, bei denen zum Regenerieren des Reformers ein Schwing-Dampf-Reformierungsprozess durchgeführt wird. Das jeweilige Brennstoffzellensystem umfasst hierzu einen Reformer, eine Brennstoffzelle und eine Regenerationseinrichtung zum Fördern eines sauerstoffhaltigen Gases durch den Reformer entgegen der Strömungsrichtung im Normalbetrieb. Hierbei wird die Versorgung des Reformers mit Brennstoff unterbrochen.

Die vorliegende Erfindung beschäftigt sich mit dem Problem, für ein Brennstoffzellensystem bzw. für ein zugehöriges Betriebsverfahren eine verbesserte Ausführungsform anzugeben, die sich insbesondere durch eine erhöhte Effektivität des Reformers bzw. des Brennstoffzellensystems auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, den Reformer bedarfsabhängig mit einem Sauerstoffgas enthaltenden Oxidatorgas entgegen der im Normalbetrieb vorliegenden Strömungsrichtung zu durchströmen. Durch die Beaufschlagung des Reformers mit Sauerstoff lassen sich Verunreinigungen, insbesondere durch Verbrennung, entfernen. Während dieses Regenerationsbetriebs ist die Versorgung des Reformers mit Brennstoff unterbrochen bzw. ausgeschaltet. Zweckmäßig wird dieser Regenerationsbetrieb zu einem Zeitpunkt durchgeführt, zu dem der Reformer oder zumindest sein Katalysator eine Regenerationstemperatur aufweist, die eine Umsetzung der Verunreinigungen mit Sauerstoffgas ermöglicht. Vorzugsweise befindet sich der Reformer zu Beginn des Regenerationsbetriebs auf seiner Betriebstemperatur, die er auch während des Normalbetriebs aufweist. Vorteilhaft ist bei der vorgeschlagenen Vorgehensweise außerdem, dass die Regenerationsreaktion exotherm ist, so dass es möglich ist, den Reformer während des Regenerationsbetriebs auf seiner Betriebstemperatur zu halten. Somit steht der Reformer unmittelbar nach Beendigung des Regenerationsvorgangs wieder für den Normalbetrieb, also zur Produktion von Anodengas zur Verfügung. Alternativ kann der Regenerationsbetrieb über eine Steuerung in Abhängigkeit von Kennfeldern aktiviert werden, z.B. nach einer vorbestimmten Laufzeit des Reformers.

Ein wesentlicher Aspekt der vorliegenden Erfindung ist darin zu sehen, dass das Oxidatorgas während des Regenerationsbetriebs den Reformer in Gegenstromrichtung durchströmt. Hierdurch wird die Gefahr, dass Sauerstoffgas auf die Anodenseite bzw. an die Anode der Brennstoffzelle gelangt, reduziert. Dies hat zur Folge, dass die Regeneration des Reformers auch zu einem Zeitpunkt durchgeführt werden kann, zu dem die Brennstoffzelle eine Temperatur aufweist, bei der eine Kontaktierung der Anode mit Sauerstoffgas irreparable Schäden an der Anode hervorrufen würde. Insbesondere kann sich somit die Brennstoffzelle auf ihrer im Normalbetrieb vorliegenden Betriebstemperatur befinden, so dass es möglich ist, das erfindungsgemäße Regenerationsverfahren in einer Betriebspause durchzuführen, während der vorübergehend kein Strom produziert werden muss, das Brennstoffzellensystem jedoch weiter betriebsbereit, also auf Betriebstemperatur gehalten wird, um bei erneut einsetzendem Strombedarf diesen möglichst rasch decken zu können.

Zur Realisierung dieses eine Regeneration des Reformers ermöglichenden Betriebsverfahrens schlägt die Erfindung vor, das Brennstoffzellensystem mit einer Regenationseinrichtung auszustatten, mit deren Hilfe das Oxidatorgas entgegen der normalen Strömungsrichtung durch den Reformer gefördert werden kann. Des Weiteren wird erfindungsgemäß vorgeschlagen, dass der Regenerationsbetrieb zum Regenerieren des Reformers durchgeführt wird, wenn während des Normalbetriebs des Brennstoffzellensystems eine Pause auftritt, in der kein Strom erzeugt wird, oder sobald der Reformer während eines Kaltstarts des Brennstoffzellensystems und bevor das Brennstoffzellensystem elektrischen Strom produziert eine für seine Regeneration ausreichende Temperatur erreicht.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in der Zeichnung dargestellt und werden in der nachfolgenden Beschreibung näher erläutert.

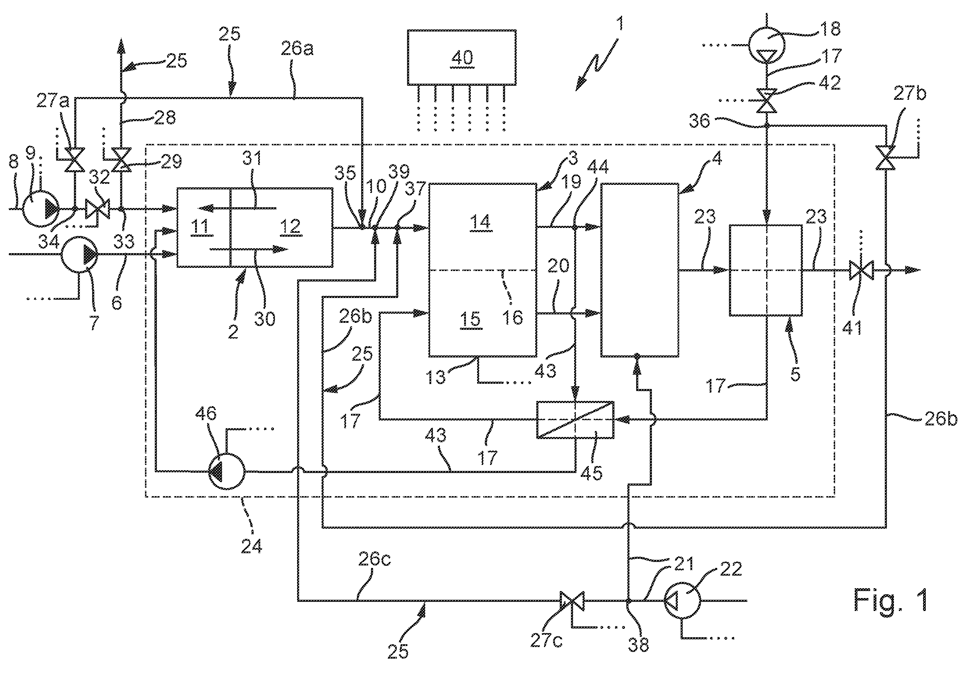

Die einzige Fig. 1 zeigt eine stark vereinfachte, schaltplanartige Prinzipdarstellung eines Brennstoffzellensystems.

Entsprechend Fig. 1 umfasst ein Brennstoffzellensystem 1 einen Reformer 2 sowie eine Brennstoffzelle 3. Ferner kann das Brennstoffzellensystem 1 einen Restgasbrenner 4 und einen Wärmeübertrager 5 aufweisen. Das Brennstoffzellensystem 1 kann beispielsweise in einem Kraftfahrzeug angeordnet sein und kann dort als zusätzliche oder als einzige Stromquelle für elektrische Verbraucher des Fahrzeugs dienen.

Der Reformer 2 dient zum Generieren eines Wasserstoffgas enthaltenden Anodengases, wozu er einen Wasserstoff enthaltenden Brennstoff mit einem Sauerstoff enthaltenden Oxidator umsetzt. Als Brennstoff eignet sich grundsätzlich jeder Kohlenwasserstoff. Bevorzugt wird als Brennstoff jedoch der Kraftstoff verwendet, mit eine Brennkraftmaschine des mit dem Brennstoffzellensystem 1 ausgestatteten Fahrzeugs arbeitet, also beispielsweise Diesel, Benzin oder Erdgas. Als Oxidator wird bevorzugt Luft verwendet.

An den Reformer 2 ist eingangsseitig eine Brennstoffleitung 6 angeschlossen, in der eine Fördereinrichtung 7, z.B. ein Gebläse oder eine Pumpe, zum Antreiben des Brennstoffs angeordnet ist. Ferner ist an den Reformer 2 eingangsseitig eine Oxidatorleitung 8 angeschlossen, in der eine Fördereinrichtung 9, vorzugsweise ein Gebläse oder eine Pumpe, zum Antreiben des Oxidators angeordnet ist. Ausgangsseitig ist an den Reformer 2 eine Anodengasleitung 10 angeschlossen, die das vom Reformer 2 generierte Anodengas vom Reformer 2 wegführt und der Brennstoffzelle 3 zuführt.

Üblicherweise kann der Reformer 2 eingangsseitig eine Verdampfer- und Mischeinrichtung 11 enthalten, der ein Katalysator 12 nachgeordnet ist. In der Verdampfer- und Mischeinrichtung 11 kann beispielsweise mittels kalter Flamme ein kleiner Anteil des Brennstoffs mit dem Oxidator umgesetzt werden, um die Verdampfung des übrigen Brennstoffs zu beschleunigen, um ein möglichst homogenes Gemisch aus Brennstoff und Oxidator zu erzeugen und um das Gemisch bzw. den Katalysator 12 aufzuheizen bzw. auf Betriebstemperatur zu halten. Im Katalysator 12 kann bei einem stark unterstöchiometrischen Verhältnis von Sauerstoff zu Brennstoff eine partielle Oxidation des Brennstoffs durchgeführt werden, um so das gewünschte Wasserstoffgas enthaltende Anodengas zu erzeugen.

Die Brennstoffzelle 3 dient dazu, aus dem Anodengas und einem Sauerstoffgas enthaltenden Kathodengas elektrischen Strom zu generieren, der an wenigstens einem Stromanschluss 13 abgreifbar ist. Die Brennstoffzelle 3 weist in üblicher Weise eine Anodenseite 14 und eine Kathodenseite 15 auf, die durch einen Elektrolyt 16, vorzugsweise in Form einer Membran, voneinander getrennt sind. Die der Anodenseite 14 zugewandte Seite des Elektrolyts 16 bildet die Anode der Brennstoffzelle 3, während die der Kathodenseite 15 zugewandte Seite des Elektrolyts 16 die Kathode der Brennstoffzelle 3 bildet. Die Brennstoffzelle 3 kann vorzugsweise als Hochtemperatur-Brennstoffzelle, insbesondere als Festkörper-Brennstoffzelle, sogenannte SOFC-Brennstoffzelle, ausgestaltet sein. Ebenso ist es möglich, die Brennstoffzelle 3 als Niedertemperatur-Brennstoffzelle auszugestalten, und zwar insbesondere als PEM-Brennstoffzelle, die mit einer Protonen-Transport-Membran bzw. mit einer Polymer-Elektrolyt-Membran arbeitet.

An die Brennstoffzelle 3 ist eingangsseitig an ihrer Anodenseite 14 die Anodengasleitung 10 angeschlossen, um im Normalbetrieb die Brennstoffzelle 3 bzw. die Anodenseite 14 mit Anodengas zu versorgen. Zur Versorgung mit Kathodengas ist die Brennstoffzelle 3 eingangsseitig an ihrer Kathodenseite 15 an eine Kathodengasleitung 17 angeschlossen, in der eine Fördereinrichtung 18, z.B. eine Pumpe oder Gebläse, angeordnet sein kann, um das Kathodengas anzutreiben. Beim Kathodengas handelt es sich vorzugsweise um Luft. Ausgangsseitig ist die Brennstoffzelle 3 mit ihrer Anodenseite 14 an eine Anodenabgasleitung 19 zum Abführen eines Wasserstoffgas enthaltenden Anodenabgases und mit ihrer Kathodenseite 15 an eine Kathodenabgasleitung 20 zum Abführen eines Sauerstoffgas enthaltenden Kathodenabgases angeschlossen.

Der Restgasbrenner 4 dient im Normalbetrieb des Brennstoffzellensystems 1 dazu, das Anodenabgas mit dem Kathodenabgas zu verbrennen, also die brennbaren Bestandteile, z.B. das restliche Wasserstoffgas, im Anodenabgas umzusetzen. Hierdurch kann der Wirkungsgrad des Brennstoffzellensystems 1 gesteigert werden, während gleichzeitig die Schadstoffemissionen des Brennstoffzellensystems 1 reduziert werden. An den Restgasbrenner 4 sind eingangsseitig die Anodenabgasleitung 19 und die Kathodenabgasleitung 20 angeschlossen. Ferner kann an den Restgasbrenner 4 eine Kühlgasleitung 21 angeschlossen sein, in der eine Fördereinrichtung 22, z.B. eine Pumpe oder ein Gebläse, zum Antreiben des jeweiligen Kühlgases angeordnet sein kann. Beim Kühlgas handelt es sich vorzugsweise um Luft. Mit Hilfe der Einspeisung von Kühlgas kann eine Überhitzung des Restgasbrenners 4 bzw. eine Überhitzung des nachgeordneten Wärmeübertragers 5 vermieden werden.

Im gezeigten Beispiel bilden die Brennstoffzelle 3 und der Restgasbrenner 4 voneinander getrennte Bauteile. Ebenso ist eine Ausführungsform mit integraler Bauweise denkbar, bei der der Restgasbrenner 4 quasi eine Ausgangsseite der Brennstoffzelle 3 bildet, wodurch die Anodenabgasleitung 19 und die Kathodenabgasleitung 20 entfallen bzw. im Inneren dieser Baugruppe verlaufen.

Der Restgasbrenner 4 ist ausgangsseitig an eine Abgasleitung 23 angeschlossen, die ein bei der Verbrennung von Anodenabgas mit Kathodenabgas entstehendes Brennerabgas vom Restgasbrenner 4 abführt. Der Wärmeübertrager 5 ist nun einerseits in die Abgasleitung 23 und andererseits bevorzugt in die Kathodengasleitung 17 eingebunden. Der Wärmeübertrager 5 bewirkt eine wärmeübertragende Kopplung zwischen der Abgasleitung 23 und der Kathodengasleitung 17, wodurch es möglich ist, das Kathodengas vorzuheizen. Bei der hier gezeigten Ausführungsform bilden der Restgasbrenner 4 und der Wärmeübertrager 5 voneinander getrennten Bauteile. Ebenso ist eine integrale Bauweise möglich, bei welcher der Wärmeübertrager 5 quasi eine Ausgangsseite des Restgasbrenners 4 bildet.

Ferner kann das Brennstoffzellensystem 1 zumindest eine thermisch isolierende Isolationsbox 24 umfassen, in der die im Betrieb des Brennstoffzellensystems 1 besonders heißen Komponenten untergebracht sind. Zumindest die Brennstoffzelle 3 befindet sich innerhalb der Isolationsbox 24. In der gezeigten Ausführungsform sind außerdem der Reformer 2, der Restgasbrenner 4 und der Wärmeübertrager 5 in dieser Isolationsbox 24 angeordnet. Dabei ist klar, dass die Isolationsbox 24 grundsätzlich aus zwei oder mehr Teilboxen bestehen kann.

Erfindungsgemäß ist nun das Brennstoffzellensystem 1 mit einer Regenationseinrichtung 25 ausgestattet, die es ermöglicht, ein Sauerstoffgas enthaltendes Oxidatorgas durch den Reformer 2 zu fördern, und zwar entgegen einer während des Normalbetriebs des Brennstoffzellensystems 1 vorherrschenden Strömungsrichtung. Als Oxidatorgas eignet sich beispielsweise Luft. Die im Normalbetrieb des Brennstoffzellensystems 1 im Reformer 2 vorliegende normale Strömungsrichtung ist in Fig. 1 durch einen Pfeil 30 symbolisiert. Die im Regenerationsbetrieb im Reformer 2 vorliegende Gegenstromrichtung ist in Fig. 1 durch einen Pfeil 31 repräsentiert.

Im Normalbetrieb des Brennstoffzellensystems 1 erzeugt der Reformer 2 Anodengas und wird hierzu eingangsseitig über die Brennstoffleitung 6 mit Brennstoff und über die Oxidatorleitung 8 mit Oxidator versorgt. Die sich dabei einstellende normale Strömungsrichtung 30 ist somit von der Oxidatorleitung 8 zur Anodengasleitung 10 orientiert, also in Fig. 1 von links nach rechts. Im Normalbetrieb des Brennstoffzellensystems 1 generiert die Brennstoffzelle 3 elektrischen Strom, d.h., während des Normalbetriebs ist an der Brennstoffzelle 3 elektrischer Strom abgreifbar. Je nach Strombedarf erfolgt die Umsetzung von Anodengas und Kathodengas in der Brennstoffzelle 3. Somit erfolgt auch die Umsetzung der Brennstoffzellenabgase im Restgasbrenner 4 je nach Strombedarf. Während des Normalbetriebs des Reformers 2 und insbesondere während eines Kaltstarts des Reformer 2 bzw. des Brennstoffzellensystems 1 können sich im Reformer 2 Verunreinigungen ablagern. Beispielsweise können sich im Katalysator 12 Rußpartikel ablagern. Ebenso ist eine Verunreinigung der Verdampfungs- und Mischeinrichtung 11 möglich. Um die Leistungsfähigkeit des Reformers 2 auf einem hohen Niveau zu halten, schlägt die Erfindung die Durchführung eines Regenerationsbetriebs vor, bei dem der Reformer 2 regeneriert wird. Für diesen Regenerationsbetrieb fördert die Regenerationseinrichtung 25 das Oxidatorgas entgegen der normalen Strömungsrichtung 30, also in Gegenstromrichtung 31 durch den Reformer 2. Die Oxidatorgasströmung ist somit von der Anodengasleitung 10 zur Oxidatorleitung 8 orientiert, also in Fig. 1 von rechts nach links. Die Beaufschlagung des Katalysators 12 mit Sauerstoffgas führt zu einem Abbrand der darin abgelagerten Verunreinigungen, insbesondere Rußpartikel. Gleichzeitig wird dabei auch die Verdampfer- und Mischeinrichtung 11 gereinigt.

Die Regenerationseinrichtung 25 umfasst zumindest eine Zuführleitung 26, die ausgangsseitig an die Anodengasleitung 10 angeschlossen ist. In Fig. 1 sind exemplarisch drei derartige Zuführleitungen 26 eingezeichnet, die mit 26a, 26b und 26c bezeichnet sind. Die drei Zuführleitungen 26a, 26b, 26c können jeweils alternativ oder kumulativ oder in beliebiger Kombination realisiert sein. Dabei ist klar, dass grundsätzlich auch wenigstens eine weitere, andere Anordnung einer solchen Zuführleitung 26 möglich ist.

Die jeweilige Zuführleitung 26 enthält ein Ventil 27 bzw. 27a, 27b, 27c, mit dem die jeweilige Zuführleitung 26a, 26b, 26c geöffnet und gesperrt werden kann.

Die Regenerationseinrichtung 25 umfasst außerdem eine Abführleitung 28. Diese zweigt von der Oxidatorleitung 8 ab, und zwar zwischen der in der Oxidatorleitung 8 angeordneten Fördereinrichtung 9 und dem Reformer 2. Die Abführleitung 28 enthält ein Ventil 29, mit dem die Abführleitung 28 geöffnet und gesperrt werden kann. Ferner umfasst die Regenerationseinrichtung 25 ein weiteres Ventil 32, das in der Oxidatorleitung 8 angeordnet ist und mit dem die Oxidatorleitung 8 geöffnet und gesperrt werden kann. Dabei ist dieses Ventil 32 bezüglich der normalen Strömungsrichtung 30 stromauf einer Abzweigstelle 33, an welcher die Abführleitung 28 von der Oxidatorleitung 8 abzweigt, in der Oxidatorleitung 8 angeordnet.

Die mit 26a bezeichnete Zuführleitung zweigt eingangsseitig bei 34 von der Oxidatorleitung 8 ab und mündet ausgangsseitig bei 35 in die Anodengasleitung 10. Die Abzweigstelle 34 dieser Zuführleitung 26a ist dabei zwischen der in der Oxidatorleitung 8 angeordneten Fördereinrichtung 9 und dem Reformer 2 angeordnet. Außerdem ist diese Abzweigstelle 34 bezüglich der normalen Strömungsrichtung 30 stromauf der Abführleitung 28 sowie insbesondere stromauf des in der Oxidatorleitung 8 angeordneten Ventils 32 angeordnet.

Die mit 26b bezeichnete Zuführleitung zweigt eingangsseitig bei 36 von der Kathodengasleitung 17 ab und mündet ausgangsseitig bei 37 in die Anodengasleitung 10 ein. Somit befindet sich die Abzweigstelle 36 in der Kathodenleitung 17 zwischen der Brennstoffzelle 3 und der Fördereinrichtung 18. Die Abzweigung 36 befindet sich dabei zweckmäßig stromauf des Wärmeübertragers 5, damit für das Ventil 27b eine weniger hitzebeständige und damit preiswertere Bauform verwendbar ist.

Die mit 26c bezeichnete Zuführleitung zweigt eingangsseitig bei 38 von der Kühlgasleitung 21 ab und mündet ausgangsseitig bei 39 in die Anodengasleitung 10 ein. Somit befindet sich die Abzweigstelle 38 in der Kühlgasleitung 21 zwischen dem Restgasbrenner 4 und der Fördereinrichtung 22. Es ist klar, dass wenigstens zwei der drei exemplarisch dargestellten Einleitstellen 35, 37, 39 zusammenfallen können.

Optional kann noch ein Ventil 41 in der Abgasleitung 23 angeordnet sein, zweckmäßig stromab des Wärmeübertragers 5, um auch hier eine preiswertere Bauweise ohne Hochtemperaturfestigkeit verwenden zu können. Mit diesem Ventil 41 kann bei Bedarf die Abgasleitung 23 gesperrt und geöffnet werden. Zusätzlich oder alternativ kann noch ein Ventil 42 in der Kathodengasleitung 17 angeordnet sein, mit dem diese bedarfsabhängig gesperrt und geöffnet werden kann. Vorzugsweise ist dieses Ventil 42 stromauf des Wärmeübertragers 5 im kalten Bereich und insbesondere stromauf der Abzweigung 36 angeordnet.

Das Brennstoffzellensystem 1 kann außerdem mit einer Steuerung 40 ausgestattet sein, die zur Realisierung des Regenerationsbetriebs ausgestaltet ist. Insbesondere ist die Steuerung 40 mit der durch die Ventile 27, 29, 32, 41 ,42 gebildeten Ventilanordnung auf geeignete Weise verbunden, so dass die Steuerung 40 die einzelnen Ventile 27, 29, 32, 41, 42 betätigen kann. Außerdem kann die Steuerung 40 mit zumindest einer der Fördereinrichtungen 7, 9, 18, 22 zu deren Betätigung verbunden sein.

Für den Normalbetrieb des Brennstoffzellensystems 1 betätigt die Steuerung 40 die Ventilanordnung 27, 29, 32, 41, 42 so, dass die jeweilige Zuführleitung 26 und die Abführleitung 28 gesperrt sind, während gleichzeitig die Oxidatorleitung 8 geöffnet ist. Ferner sind auch die Abgasleitung 23 und die Kathodengasleitung 17 geöffnet. Mit anderen Worten, die Steuerung 40 steuert die Ventile 27 und 29 zum Sperren und die Ventile 32, 41, 42 zum Öffnen an. In der Folge stellt sich im Reformer 2 die normale Strömungsrichtung 30 ein. Da die jeweilige Zuführleitung 26 durch das darin angeordnete Ventil 27 gesperrt ist, können Fehlströmungen über die jeweilige Einleitstelle 35, 37, 39 vermieden werden. Ebenso kommt es zu keiner Fehlströmung über die Abführleitung 28. Falls eine Regeneration des Reformers 2 erforderlich ist und/oder falls für eine ausreichende Zeitspanne kein Strombedarf vorliegt, kann die Steuerung 40 eine Regeneration des Reformers 2 durchführen. Dabei ist von Bedeutung, dass dieser Regenerationsbetrieb auch dann durchgeführt werden kann, wenn sich die Brennstoffzelle 3 auf ihrer Betriebstemperatur befindet und eine Kontaktierung der Anode mit Sauerstoffgas vermieden werden muss. Insbesondere kann somit der Regenerationsbetrieb unmittelbar nach Beendigung der Stromabgabe der Brennstoffzelle 3 durchgeführt werden. Insbesondere kann die Regeneration des Reformers 2 während einer Betriebspause, während der die Brennstoffe 3 keinen Strom generiert bzw. während der an der Brennstoffzelle 3 kein Strom abgegriffen wird, durchgeführt werden. Mit anderen Worten, die Regenerationsbetrieb kann während eines Bereitschaftszustands des Brennstoffzellensystems 1 durchgeführt werden, bei dem die Brennstoffzelle 3 relativ rasch in den Normalbetrieb zur Stromerzeugung übergehen kann. Ebenso kann vorgesehen sein, dass die Steuerung 40 bei einem Kaltstart des Reformers 2 bzw. des Brennstoffzellensystems 1 eine Regeneration des Reformers 2 durchführt, und zwar insbesondere regelmäßig bei jedem Kaltstart. Dies ist von besonderem Vorteil, da sich gezeigt hat, dass es während des Kaltstartvorgangs zu einer relativ starken Verunreinigung des Reformers 2 kommen kann. Der Regenerationsbetrieb wird dann durchgeführt, sobald der Reformer 2 eine für den Regenerationsprozess hinreichend hohe Temperatur erreicht. Beispielsweise wird der Reformer 2 aufgeheizt bis sein Katalysator 12 die Anspringtemperatur erreicht, bei der die Regenerationsreaktion iniziiert wird, sobald er mit Sauerstoff in Kontakt kommt. Die Regeneration erfolgt dabei grundsätzlich bevor die Brennstoffzelle 3 mit der Stromproduktion begonnen hat bzw. bevor an der Brennstoffzelle 3 Strom abgreifbar ist.

Für den Regenationsbetrieb betätigt die Steuerung 40 das in der Oxidatorleitung 8 angeordnete Ventil 32 zum Sperren der Oxidatorleitung 8 und das in der Abführleitung 28 angeordnete Ventil 29 zum Öffnen der Abführleitung 28. Ferner betätigt die Steuerung 40 das in der jeweiligen Zuführleitung 26 angeordnete Ventil 27 zum Öffnen der jeweiligen Zuführleitung 26. Optional können die Ventile 41 und 42 zum Sperren der Abgasleitung 23 bzw. der Kathodengasleitung 17 betätigt werden.

Beispielsweise wird das Ventil 27a zum Öffnen der Zuführleitung 26a angesteuert. In der Folge fördert die in der Oxidatorleitung 8 angeordnete Fördereinrichtung 9 Oxidator über die Zuführleitung 26a zur Anodengasleitung 10, in der Gegenstromrichtung 31 durch den Reformer 2 und anschließend über die Abführleitung 28 ab. Diese Ausführungsform eignet sich in besonderer Weise dann, wenn es sich bei dem dem Reformer 2 zugeführten Oxidator um ein Sauerstoffgas enthaltendes Gas handelt, so dass der Oxidator als Oxidatorgas verwendet werden kann.

Falls ausgehend von der Anodengasleitung 10 der Strömungswiderstand für den Oxidator in der Gegenstromrichtung 31 durch den Reformer 2 geringer ist als in der normalen Strömungsrichtung 30 durch die Brennstoffzelle 3, ist kein zusätzliches Ventil, wie z.B. die Ventile 41, 42, erforderlich. Andernfalls ist zur Vermeidung einer Fehlströmung durch die Anodengasleitung 10, die Anodenseite 14, die Anodenabgasleitung 19, den Restgasbrenner 4 und die Abgasleitung 23 das zusätzliche Ventil 41 zu sperren. Zur Vermeidung einer Fehlströmung durch die Anodengasleitung 10, die Anodenseite 14, die Anodengasleitung 19, über den Restgasbrenner 4, durch die Kathodenabgasleitung 20, die Kathodenseite 15 und die Kathodengasleitung 17, ist ggf. das weitere Ventil 42 zu sperren.

Ebenso kann das Kathodengas als Oxidatorgas verwendet werden. In diesem Fall steuert die Steuerung 40 das Ventil 27b zum Öffnen der Zuführleitung 26b an. Die in der Kathodengasleitung 17 angeordnete Fördereinrichtung 18 fördert das Kathodengas durch die Zuführleitung 26b in die Anodengasleitung 10 und in der Gegenstromrichtung 31 durch den Reformer 2 und durch die Abführleitung 28 ab. Üblicherweise ist der Strömungswiderstand auf diesem Pfad für das Kathodengas geringer als im normalen Strömungspfad des Kathodengases 17 durch die Brennstoffzelle 3, insbesondere dann, wenn das Ventil 41 und/oder das Ventil 42 gesperrt ist/sind. Folglich ist in der Kathodengasleitung 17 stromab der Abzweigstelle 36 an sich kein zusätzliches Sperrventil erforderlich. Bei Bedarf kann jedoch ein derartiges Sperrventil vorgesehen sein.

Desweiteren ist es grundsätzlich möglich, das Kühlgas als Oxidatorgas zu verwenden. In diesem Fall kann die Steuerung 40 das Ventil 27c zum Öffnen der Zuführleitung 26c ansteuern. In der Folge strömt das Kühlgas über die Zuführleitung 26c in die Anodengasleitung 10 und in der Gegenstromrichtung 31 durch den Reformer 2 und über die Abführleitung 28 ab. Auch hier kann der Strömungspfad durch den Reformer 2 einen kleineren Strömungswiderstand aufweisen als der normale Strömungspfad des Kühlgases, insbesondere wenn das Ventil 41 bzw. das Ventil 42 gesperrt ist/sind. Grundsätzlich kann jedoch in der Kühlgasleitung 21 stromab der Abzweigstelle 38 ein geeignetes Ventil angeordnet sein.

Vorteilhaft bei den hier beschriebenen Ausführungsformen ist, dass beim Regenerationsbetrieb zum Antreiben des Oxidatorgases jeweils eine Fördereinrichtung verwendet werden kann, die ohnehin schon im Brennstoffzellensystem 1 vorhanden ist. Bei der Verwendung des Oxidators als Oxidatorgas wird die in der Oxidatorleitung 8 angeordnete Fördereinrichtung 9 verwendet. Bei der Verwendung des Katodengases als Oxidatorgas wird die in der Kathodengasleitung 17 vorhandene Fördereinrichtung 18 verwendet. Bei der Verwendung des Kühlgases als Oxidatorgas wird die in der Kühlgasleitung 21 vorhandene Fördereinrichtung 22 verwendet.

Desweiteren können sämtliche Ventile 27, 29, 32, 41, 42 der Ventilanordnung und die Fördereinrichtungen 7, 9, 18, 22 außerhalb der Isolationsbox 24 angeordnet werden, also in einem Bereich vergleichsweise kleiner Temperaturen, was die Herstellungskosten dieser Komponenten senkt.

Nach dem Regenerationsbetrieb betätigt die Steuerung 40 wieder die Ventilanordnung 27, 29, 32, 41, 42 zum Öffnen der Oxidatorleitung 8, zum Sperren der Abführleitung 28 und zum Sperren der jeweiligen Zuführleitung 26 sowie ggf. zum Öffnen der Abgasleitung 23 bzw. der Kathodengasleitung 17. Unmittelbar danach kann der Reformer 2 (wieder) zum Erzeugen von Anodengas betrieben werden, da während des Regenerationsvorgangs der Abbrand der auf dem Katalysator 12 vorhandenen Ablagerungen exotherm ist, so dass der Reformer 2 seine Betriebstemperatur beibehält bzw. erhält. Ebenso kann unmittelbar nach dem Regenerationsvorgang wieder Strom an der Brennstoffzelle 3 abgegriffen werden, da die Brennstoffzelle 3 ihre Betriebstemperatur mehr oder weniger halten kann, insbesondere aufgrund der Isolationsbox 24.

Das Durchführen des Regenerationsvorgangs unmittelbar nach Beenden des Normalbetriebs bzw. während einer Pause des Normalbetriebs bzw. im Rahmen eines Kaltstarts gewährleistet im Reformer 2 bzw. im Katalysator 12 eine hinreichend hohe Temperatur, die bei der Versorgung mit Oxidatorgas eine Initiierung bzw. Selbstzündung des Abbrandvorgangs ermöglicht.

Bei der hier gezeigten Ausführungsform weist das Brennstoffzellensystem 1 außerdem eine Rezirkulationsleitung 43 auf, die von der Anodenabgasleitung 19 bei 44 abzweigt und zur Eingangsseite des Reformers 2 geführt ist. Durch die Rückführung des Anodenabgases, das je nach Betriebszustand der Brennstoffzelle 3 bzw. je nach Strombedarf mehr oder weniger Wasserstoffgas enthält, in den Reformer 2 kann dessen Betrieb effizienter gestaltet werden. In der Rezirkulationsleitung 43 kann ein Rezirkulationswärmeübertrager 45 angeordnet sein, der außerdem z.B. in die Kathodengasleitung 17 oder in eine andere Stoffleitung des Brennstoffzellensystems 1 eingebunden ist, um dem Anodenabgas Wärme zu entziehen und auf den entsprechenden Stoff, z.B. auf das Kathodengas, zu übertragen. Ferner enthält die Rezirkulationsleitung 43 eine Fördereinrichtung 46, z.B. eine Pumpe, ein Gebläse, einen Kompressor, zum Antreiben des Anodenabgases. Zweckmäßig ist die Fördereinrichtung 46 dabei stromab des Rezirkulationswärmeübertragers 45 in der Rezirkulationsleitung 43 angeordnet, um eine preiswertere, weniger hitzebeständige Fördereinrichtung 46 verwenden zu können.

## Patentansprüche

1. Verfahren zum Betreiben eines Brennstoffzellensystems (1), insbesondere in einem Kraftfahrzeug,
- wobei das Brennstoffzellensystem (1) einen Reformer (2) zum Generieren eines Wasserstoffgas enthaltenden Anodengases aus einem Wasserstoff enthaltenden Brennstoff und einem Sauerstoff enthaltenden Oxidator und eine Brennstoffzelle (3) zum Generieren von elektrischem Strom aus dem Anodengas und einem Sauerstoffgas enthaltenden Kathodengas aufweist,
- bei dem während eines Regenerationsbetriebs zum Regenerieren des Reformers (2) ein Sauerstoffgas enthaltendes Oxidatorgas entgegen einer während eines Normalbetriebs zum Generieren des Anodengases und/oder des elektrischen Stroms vorliegenden Strömungsrichtung (30) durch den Reformer (2) gefördert wird, während die Versorgung des Reformers (2) mit Brennstoff unterbrochen oder ausgeschaltet wird,
**dadurch gekennzeichnet,**
**dass** der Regenerationsbetrieb zum Regenerieren des Reformers (2) durchgeführt wird, wenn während des Normalbetriebs des Brennstoffzellensystems (1) eine Pause auftritt, in der kein Strom erzeugt wird, oder sobald der Reformer (2) während eines Kaltstarts des Brennstoffzellensystems (1) und bevor das Brennstoffzellensystem (1) elektrischen Strom produziert eine für seine Regeneration ausreichende Temperatur erreicht.

2. Verfahren nach Anspruch 1,
**dadurch gekennzeichnet,**
- **dass** zum Regenerieren des Reformers (2) der beim Normalbetrieb verwendete Oxidator als Oxidatorgas verwendet wird, und/oder
- **dass** zum Regenerieren des Reformers (2) das beim Normalbetrieb verwendete Kathodengas als Oxidatorgas verwendet wird, und/oder
- **dass** zum Regenerieren des Reformers (2) ein Sauerstoffgas enthaltendes Kühlgas verwendet wird, das im Normalbetrieb einem Restgasbrenner (4) zum Verbrennen von Wasserstoffgas enthaltendem Anodenabgas der Brennstoffzelle (3) mit Sauerstoffgas enthaltendem Kathodenabgas der Brennstoffzelle (3) zuführbar ist.

3. Verfahren nach Anspruch 1 oder 2,
**dadurch gekennzeichnet,**
**dass** das Oxidatorgas beim Regenieren des Reformers (2) in eine Anodengasleitung (10) eingespeist wird, die beim Normalbetrieb das Anodengas vom Reformer (2) zur Brennstoffzelle (3) führt.

4. Verfahren nach einem der Ansprüche 1 bis 3,
**dadurch gekennzeichnet,**
**dass** beim Regenerieren des Reformers (2) zum Antreiben des Oxidatorgases eine Fördereinrichtung (9, 18, 22) verwendet wird, die im Normalbetrieb zum Antreiben des Oxidators oder zum Antreiben des Kathodengases oder zum Antreiben des Kühlgases verwendet wird.

5. Verfahren nach einem der Ansprüche 1 bis 4,
**dadurch gekennzeichnet,**
**dass** der Regenerationsbetrieb zum Regenerieren des Reformers (2) durchgeführt wird, wenn die Brennstoffzelle (3) auf Betriebstemperatur ist.

6. Brennstoffzellensystem, insbesondere in einem Kraftfahrzeug,
- mit einem Reformer (2) zum Generieren eines Wasserstoffgas enthaltenden Anodengases aus einem Wasserstoff enthaltenden Brennstoff und einem Sauerstoff enthaltenden Oxidator,
- mit einer Brennstoffzelle (3) zum Generieren von elektrischem Strom aus dem Anodengas und einem Sauerstoffgas enthaltenden Kathodengas,
- mit einer Regenerationseinrichtung (25) zum Fördern eines Sauerstoffgas enthaltenden Oxidatorgases durch den Reformer (2) entgegen einer während eines Normalbetriebs zum Generieren des Anodengases und/oder des Stroms vorliegenden Strömungsrichtung (30) bei unterbrochener oder ausgeschalteter Versorgung des Reformers (2) mit Brennstoff,
**gekennzeichnet durch** eine Steuerung (40) zur Realisierung eines Regenerationsbetriebs, bei dem die Regenerationseinrichtung (25) das Oxidatorgas entgegen besagter Strömungsrichtung (30) fördert, wenn während des Normalbetriebs eine Pause auftritt, in der kein Strom erzeugt wird, oder sobald der Reformer (2) während eines Kaltstarts des Brennstoffzellensystems (1) und bevor das Brennstoffzellensystem (1) elektrischen Strom produziert eine für seine Regeneration ausreichende Temperatur erreicht.

7. Brennstoffzellensystem nach Anspruch 6,
**dadurch gekennzeichnet,**
**dass** die Regenerationseinrichtung (25) eine Zuführleitung (26) aufweist, die an eine Anodengasleitung (10) angeschlossen ist, die im Normalbetrieb das Anodengas vom Reformer (2) zur Brennstoffzelle (3) führt.

8. Brennstoffzellensystem nach Anspruch 6 oder 7,
**dadurch gekennzeichnet,**
**dass** die Regenerationseinrichtung (25) eine Abführleitung (29) aufweist, die von einer Oxidatorleitung (8) abzweigt, die im Normalbetrieb dem Reformer (2) den Oxidator zuführt.

9. Brennstoffzellensystem nach Anspruch 7 oder 8,
**dadurch gekennzeichnet,**
**dass** der dem Reformer (2) im Normalbetrieb zugeführte Oxidator gasförmig ist und dass die Zuführleitung (26a) bezüglich der während des Normalbetriebs vorliegenden Strömungsrichtung (30) stromauf der Abführleitung (28) von der Oxidatorleitung (8) abzweigt, so dass der Oxidator das Oxidatorgas bildet.

10. Brennstoffzellensystem nach Anspruch 9,
**dadurch gekennzeichnet,**
**dass** die Zuführleitung (26a) zwischen dem Reformer (2) und einer Fördereinrichtung (9) zum Antreiben des Oxidators von der Oxidatorleitung (8) abzweigt.

11. Brennstoffzellensystem nach einem der Ansprüche 7 bis 10,
**dadurch gekennzeichnet,**
**dass** die Zuführleitung (26b) von einer Kathodengasleitung (17) abzweigt, die im Normalbetrieb der Brennstoffzelle (3) das Kathodengas zuführt, so dass das Kathodengas das Oxidatorgas bildet.

12. Brennstoffzellensystem nach Anspruch 11,
**dadurch gekennzeichnet,**
**dass** die Zuführleitung (26b) zwischen der Brennstoffzelle (3) und einer Fördereinrichtung (18) zum Antreiben des Kathodengases von der Kathodengasleitung (17) abzweigt.

13. Brennstoffzellensystem nach einem der Ansprüche 7 bis 12,
**dadurch gekennzeichnet, dass** die Zuführleitung (26c) von einer Kühlgasleitung (21) abzweigt, die im Normalbetrieb einem Restgasbrenner (4) zum Verbrennen eines Wasserstoffgas enthaltenden Anodenabgases der Brennstoffzelle (3) mit einem Sauerstoffgas enthaltenden Kathodenabgas der Brennstoffzelle (3) ein Sauerstoffgas enthaltendes Kühlgas zuführt, so dass das Kühlgas das Oxidatorgas bildet.

14. Brennstoffzellensystem nach Anspruch 13,
**dadurch gekennzeichnet,**
**dass** die Zuführleitung (26c) zwischen dem Restgasbrenner (3) und einer Fördereinrichtung (22) zum Antreiben des Kühlgases von der Kühlgasleitung (21) abzweigt.

15. Brennstoffzellensystem nach einem der Ansprüche 7 bis 14,
**dadurch gekennzeichnet,**
**dass** die Regenerationseinrichtung (25) eine Ventilanordnung (27, 29, 32, 41, 42) aufweist, die im Normalbetrieb die jeweilige Zuführleitung (26) und die Abführleitung (28) sperrt und die Oxidatorleitung (8) öffnet und die im Regenerationsbetrieb zum Regenerieren des Reformers (2) die jeweilige Zuführleitung (26) und die Abführleitung (28) öffnet und die Oxidatorleitung (8) bezüglich der während des Normalbetriebs vorliegenden Strömungsrichtung (30) stromauf der Abführleitung (28) sperrt.

16. Brennstoffzellensystem nach Anspruch 15,
**dadurch gekennzeichnet,**
**dass** die Steuerung (40) die Ventilanordnung (27, 29, 32, 41, 42) so ansteuert, dass sie im Regenerationsbetrieb eine Abgasleitung (23) eines einer Brennstoffzelle (3) des Brennstoffzellensystems (1) nachgeschalteten Restgasbrenners (4) und/oder eine Kathodengas einer Brennstoffzelle (3) des Brennstoffzellensystems (1) zuführende Kathodengasleitung (17) sperrt und im Normalbetrieb die Abgasleitung (23) und/oder die Kathodengasleitung (17) öffnet.

## Claims

1. Method for operating a fuel cell system (1), in particular in a motor vehicle,
- the fuel cell system (1) comprising a reformer (2) for generating an anode gas containing hydrogen gas from a fuel containing hydrogen and an oxidiser containing oxygen and a fuel cell (3) for generating electric current from the anode gas and a cathode gas containing oxygen gas,
- in which during a regeneration operation for regenerating the reformer (2) an oxidising gas containing an oxygen gas is conveyed through the reformer (2) against a flow direction (30) set during normal operation for generating the anode gas and/or the electric current, while the supply of the reformer (2) with fuel is interrupted or disconnected
**characterised in that**,
the regeneration operation for regenerating the reformer (2) is performed when there is a pause in the normal operation of the fuel cell system (1) in which no current is produced, and/or as soon as the reformer (2) reaches a temperature sufficient for its regeneration during a cold start of the fuel cell system (1) and before the fuel cell system (1) produces electric current.

2. Method according to claim 1,
**characterised in that**
- for regenerating the reformer (2) the oxidiser used during normal operation is used as the oxidising gas, and/or
- for regenerating the reformer (2) the cathode gas used during normal operation is used as the oxidising gas, and/or
- for regenerating the reformer (2) a cooling gas containing oxygen gas is used, which during normal operation can be supplied to a residual gas burner (4) for burning anode exhaust gas of the fuel cell (3) containing hydrogen gas with cathode waste gas of the fuel cell (3) containing oxygen gas.

3. Method according to either claim 1 or 2,
**characterised in that**
the oxidising gas is fed into an anode gas line (10) during the regeneration of the reformer (2), which line during normal operation brings the anode gas from the reformer (2) to the fuel cell (3).

4. Method according to any one of claims 1 to 3,
**characterised in that**
during the regeneration of the reformer (2) for driving the oxidising gas a conveying device (9, 18, 22) is used, which during normal operation is used for driving the oxidiser or for driving the cathode gas or for driving the cooling gas.

5. Method according to any one of claims 1 to 4,
**characterised in that**
the regeneration operation for regenerating the reformer (2) is performed when the fuel cell (3) is at operating temperature.

6. Fuel cell system, in particular in a motor vehicle comprising
- a reformer (2) for generating an anode gas containing a hydrogen gas from a fuel containing hydrogen and an oxidiser containing oxygen,
- a fuel cell (3) for generating electric current from the anode gas and a cathode gas containing oxygen gas,
- a regeneration device (25) for conveying an oxidising gas containing oxygen gas through the reformer (2) against a flow direction (30) set during normal operation for generating the anode gas and/or the current with an interrupted or disconnected supply of fuel to the reformer (2),
**characterised by** a control (40) for performing a regeneration operation in which the regeneration device (25) conveys the oxidising gas against the said flow direction (30) when there is a pause in the normal operation in which no current is produced, or as soon as the reformer (2) reaches a temperature sufficient for its regeneration during a cold start of the fuel cell system (1) and before the fuel cell system (1) produces electric current.

7. Fuel cell system according to claim 6,
**characterised in that**
the regeneration device (25) comprises a feed line (26) which is connected to an anode gas line (10), which during normal operation brings the anode gas from the reformer (2) to the fuel cell (3).

8. Fuel cell system according to either claim 6 or claim 7,
**characterised in that**
the regeneration device (25) comprises an output line (29) which branches off from an oxidiser line (8) which during normal operation supplies the oxidiser to the reformer (2).

9. Fuel cell system according to either claim 7 or claim 8,
**characterised in that**
the oxidiser supplied to the reformer (2) during normal operation is gaseous and **in that** the feed line (26a) relative to the flow direction (30) set during normal operation branches off from the oxidiser line (8) upstream of the output line (28), so that the oxidiser forms the oxidising gas.

10. Fuel cell system according to claim 9,
**characterised in that**
the feed line (26b) between the reformer (2) and a conveying device (9) for driving the oxidiser branches off from the oxidiser line (8).

11. Fuel cell system according to any one of claims 7 to 10,
**characterised in that**
the feed line (26b) branches off from a cathode gas line (17), which during normal operation supplies the cathode gas to the fuel cell (3) so that the cathode gas forms the oxidising gas.

12. Fuel cell system according to claim 11,
**characterised in that**
the feed line (26b) between the fuel cell (3) and a conveying device (18) for driving the cathode gas branches off from the cathode gas line (17).

13. Fuel cell system according to any one of claims 7 to 12,
**characterised in that**
the feed line (26c) branches off from a cooling gas line (21), which during normal operation supplies a cooling gas containing oxygen gas to a residual gas burner (4) for burning an anode waste gas of the fuel cell (3) containing hydrogen gas with a cathode waste gas of the fuel cell (3) containing oxygen gas, so that the cooling gas forms the oxidising gas.

14. Fuel cell system according to claim 13,
**characterised in that**
the feed line (26c) between the residual gas burner (3) and a conveying device (22) for driving the cooling gas branches off from the cooling gas line (21).

15. Fuel cell system according to any one of claims 7 to 14,
**characterised in that**
the regeneration device (25) comprises a valve arrangement (27, 29, 32, 41, 42), which during normal operation blocks the respective feed line (26) and the output line (28) and opens the oxidiser line (8) and which during the regeneration operation for regenerating the reformer (2) opens the respective feed line (26) and the output line (28) and blocks the oxidiser line (8) relative to the flow direction (30) set during normal operation upstream of the output line (28).

16. Fuel cell system according to claim 15,
**characterised in that**
the control system (40) controls the valve arrangement (27, 29, 32, 41, 42) so that during the regeneration operation it blocks an exhaust gas line (23) of a residual gas burner (4) connected downstream of a fuel cell (3) of the fuel cell system (1) and/or a cathode gas line (17) supplying cathode gas to a fuel cell (3) of the fuel cell system (1) and during normal operation opens the exhaust gas line (23) and/or the cathode gas line (17).

## Revendications

1. Procédé de fonctionnement d'un système de pile à combustible (1), notamment dans un véhicule automobile,
- selon lequel le système de pile à combustible (1) comporte un reformeur (2) pour produire un gaz anodique contenant de l'hydrogène gazeux à partir d'un combustible contenant de l'hydrogène et d'un oxydant contenant de l'oxygène et une pile à combustible (3) pour produire du courant électrique à partir du gaz anodique et d'un gaz cathodique contenant de l'oxygène gazeux,
- selon lequel, pendant le fonctionnement en régénération pour régénérer le reformeur (2), un gaz oxydant contenant de l'oxygène gazeux est transporté à travers le reformeur (2) à l'encontre d'un sens d'écoulement (30), existant pendant un fonctionnement normal pour produire le gaz anodique et/ou le courant électrique, pendant que l'alimentation du reformeur (2) en combustible est interrompue ou arrêtée,
**caractérisé en ce que** le fonctionnement en régénération pour régénérer le reformeur (2) est effectué lorsqu'il apparaît pendant le fonctionnement normal du système de pile à combustible (1) une pause pendant laquelle aucun courant n'est produit ou dès que le reformeur (2) atteint une température suffisante pour sa régénération pendant un démarrage à froid du système de pile à combustible (1) et avant que le système de pile à combustible (1) produise un courant électrique.

2. Procédé selon la revendication 1, **caractérisé en ce que**
- pour la régénération du reformeur (2), on utilise comme gaz oxydant l'oxydant utilisé lors du fonctionnement normal, et/ou
- pour la régénération du reformeur (2), on utilise comme gaz oxydant le gaz cathodique utilisé lors du fonctionnement normal, et/ou
- pour la régénération du reformeur (2), on utilise un gaz de refroidissement qui contient de l'oxygène gazeux et qui peut être conduit pendant le fonctionnement normal à un brûleur de gaz résiduel (4) destiné à brûler un gaz d'échappement anodique, contenant de l'hydrogène gazeux, de la pile à combustible (3) avec un gaz d'échappement cathodique, contenant de l'oxygène gazeux, de la pile à combustible (3).

3. Procédé selon la revendication 1 ou 2, **caractérisé en ce que**, lors de la régénération du reformeur (2), on introduit le gaz oxydant dans une conduite de gaz anodique (10) qui, lors du fonctionnement normal, conduit le gaz anodique du reformeur (2) à la pile à combustible (3).

4. Procédé selon l'une des revendications 1 à 3, **caractérisé en ce que**, lors de la régénération du reformeur (2), on utilise pour entraîner le gaz oxydant un dispositif transporteur (9, 18, 22) qui, lors du fonctionnement normal, est utilisé pour entraîner l'oxydant ou pour entraîner le gaz cathodique ou pour entraîner le gaz de refroidissement.

5. Procédé selon l'une des revendications 1 à 4, **caractérisé en ce que** l'on met en oeuvre le fonctionnement de régénération pour régénérer le reformeur (2) lorsque la pile à combustible (3) est à la température de fonctionnement.

6. Système de pile à combustible, notamment dans un véhicule automobile,
- avec un reformeur (2) pour produire un gaz anodique contenant de l'hydrogène gazeux à partir d'un combustible contenant de l'hydrogène et d'un oxydant contenant de l'oxygène,
- avec une pile à combustible (3) pour produire un courant électrique à partir du gaz anodique et d'un gaz cathodique contenant de l'oxygène gazeux,
- avec un dispositif de régénération (25) pour transporter un gaz oxydant contenant de l'oxygène gazeux à travers le reformeur (2) à l'encontre d'un sens d'écoulement (30), existant pendant un fonctionnement normal pour produire le gaz anodique et/ou le courant électrique, pendant que l'alimentation du reformeur (2) en combustible est interrompue ou arrêtée,
**caractérisé par** une commande (40) pour réaliser un fonctionnement de régénération lors duquel le dispositif de régénération (25) transporte le gaz oxydant à l'encontre dudit sens d'écoulement (30) lorsqu'il apparaît pendant le fonctionnement normal une pause pendant laquelle aucun courant n'est produit ou dès que le reformeur (2) atteint une température suffisante pour sa régénération pendant un démarrage à froid du système de pile à combustible (1) et avant que le système de pile à combustible (1) produise un courant électrique.

7. Système de pile à combustible selon la revendication 6, **caractérisé en ce que** le dispositif de régénération (25) comporte une conduite d'amenée (26) qui est raccordée à une conduite de gaz anodique (10) qui, en fonctionnement normal, conduit le gaz anodique du reformeur (2) à la pile à combustible (3).

8. Système de pile à combustible selon la revendication 6 ou 7, **caractérisé en ce que** le dispositif de régénération (25) comporte une conduite d'évacuation (29) qui est branchée sur une conduite d'oxydant (8) qui, en fonctionnement normal, amène l'oxydant au reformeur (2).

9. Système de pile à combustible selon la revendication 7 ou 8, **caractérisé en ce que** l'oxydant amené au reformeur (2) en fonctionnement normal est à l'état gazeux et **en ce que**, par rapport au sens d'écoulement (30) existant pendant le fonctionnement normal, la conduite d'amenée (26a) est branchée sur la conduite d'oxydant (8) en amont de la conduite d'évacuation (28) de telle sorte que l'oxydant forme le gaz oxydant.

10. Système de pile à combustible selon la revendication 9, **caractérisé en ce que** la conduite d'amenée (26a) est branchée sur la conduite d'oxydant (8) entre le reformeur (2) et un dispositif transporteur (9) destiné à entraîner l'oxydant.

11. Système de pile à combustible selon l'une des revendications 7 à 10, **caractérisé en ce que** la conduite d'amenée (26b) est branchée sur une conduite de gaz cathodique (17) qui, en fonctionnement normal, amène le gaz cathodique à la pile à combustible (3) de telle sorte que le gaz cathodique forme le gaz oxydant.

12. Système de pile à combustible selon la revendication 11, **caractérisé en ce que** la conduite d'amenée (26b) est branchée sur la conduite de gaz cathodique (17) entre la pile à combustible (3) et un dispositif transporteur (18) destiné à entraîner le gaz cathodique.

13. Système de pile à combustible selon l'une des revendications 7 à 12, **caractérisé en ce que** la conduite d'amenée (26c) est branchée sur une conduite de gaz de refroidissement (21) qui, en fonctionnement normal, amène un gaz de refroidissement contenant de l'oxygène gazeux à un brûleur de gaz résiduel (4) destiné à brûler un gaz d'échappement anodique, contenant de l'hydrogène gazeux, de la pile à combustible (3) avec un gaz d'échappement cathodique, contenant de l'oxygène gazeux, de la pile à combustible (3) de telle sorte que le gaz de refroidissement forme le gaz oxydant.

14. Système de pile à combustible selon la revendication 13, **caractérisé en ce que** la conduite d'amenée (26c) est branchée sur la conduite de gaz de refroidissement (21) entre le brûleur de gaz résiduel (3) et un dispositif transporteur (22) destiné à entraîner le gaz de refroidissement.

15. Système de pile à combustible selon l'une des revendications 7 à 14, **caractérisé en ce que** le dispositif de régénération (25) comporte un dispositif de vannes (27, 29, 32, 41, 42) qui, en fonctionnement normal, ferme la conduite d'amenée (26) respective et la conduite d'évacuation (28) et ouvre la conduite d'oxydant (8) et qui, en fonctionnement de régénération pour régénérer le reformeur (2), ouvre la conduite d'amenée (26) respective et la conduite d'évacuation (28) et ferme la conduite d'oxydant (8) en amont de la conduite d'évacuation (28) par rapport au sens d'écoulement (30) existant pendant le fonctionnement normal.

16. Système de pile à combustible selon la revendication 15, **caractérisé en ce que** la commande (40) commande le dispositif de vannes (27, 29, 32, 41, 42) de telle sorte que, en fonctionnement de régénération, elle ferme une conduite de gaz d'échappement (23) d'un brûleur de gaz résiduel (4) branché en aval d'une pile à combustible (3) du système de pile à combustible (1) et/ou une conduite de gaz cathodique (17) amenant du gaz cathodique à une pile à combustible (3) du système de pile à combustible (1) et que, en fonctionnement normal, elle ouvre la conduite de gaz d'échappement (23) et/ou la conduite de gaz cathodique (17).
